# EUROPEAN PATENT APPLICATION

(11) **EP 4 098 641 A1**
(43) Date of publication of application: **07.12.2022**
(21) Application number: 22162570.0
(22) Date of filing: 16.03.2022
(51) Int. Cl.: C05D 9/00, C09K 17/10, C04B 18/16, C05G 5/12, C05D 3/02, B09B 3/35, B09B 101/45

(54) **IMPROVEMENTS IN CARBON SEQUESTRATION**

(71) Applicant: Silicate Carbon Limited, F91 YW50 Sligo (IE)
(72) Inventor: McDermott, Frank, Dublin (IE)
(74) Representative: Gillespie, Richard

(57) **Abstract**

The present disclosure is directed towards a soil additive for sequestering carbon dioxide. The soil additive comprises particles of set concrete, wherein the particles of set concrete have not fully cured.

## Description

### Field

The present application is directed towards improvements in sequestering carbon dioxide.

### Background

Carbon dioxide is the most common greenhouse gas (GHG). The U.S. Energy Information Administration estimated that in 2019, the US emitted 5,130 million metric tons of energy-related carbon dioxide. Global emissions of energy-related carbon dioxide totalled 33,621.5 million metric tons. According to the World Meteorological Organization, the concentrations of atmospheric carbon dioxide in 2019 showed a 48% increase since 1750. These carbon dioxide levels are higher than they have been at any time during the last two million years. There is clear evidence that the frequency of severe weather events is increasing. Unless the amount of carbon dioxide in the atmosphere is reduced, the resulting increases in global warming are expected to produce more intense convection over land resulting in a higher frequency of the most severe storms and other weather events, while also exacerbating drought in drought prone areas and increasing flooding in temperate areas.

The recent IPCC AR6 Technical Report (IPCC, 2021) highlights the need for decarbonisation by rapidly phasing out fossil fuels. However, this report also highlights that removing carbon dioxide from the atmosphere will be essential to at least stabilise atmospheric carbon dioxide at its current levels and reduce the risk of increasing atmospheric carbon dioxide further by mid-21^{st} century. The Intergovernmental Panel on Climate Change (IPCC) produced a report in 2018 that stated 'all pathways that limit global warming to 1.5°C with limited or no overshoot project the use of carbon dioxide removal (CDR) on the order of 100-1000 GtCO₂ over the 21st century.'

Ireland failed to meet its 2020 greenhouse gas emission targets and its per-capita GHG emissions are now the third highest in the EU. Despite high levels of installed wind capacity for electricity generation, renewable energy sources provide only 11% of Ireland's total energy consumption, implying a continued reliance on fossil fuels for the coming decades. Achieving net zero by 2050 will therefore be exceedingly challenging for Ireland and will require the deployment of multiple large-scale verifiable negative emission technologies.

Carbon sequestration is the process of capturing and storing atmospheric carbon dioxide. It is one method to reduce the amount of carbon dioxide in the atmosphere, with the goal of reducing global climate change. The article entitled 'Big Green Brands Have a Dirty Supplier Problem, CDP Says' by Irina Anghel et al. states that the 'European Union aims to capture and store as much as 5 million metric tons of CO₂ annually by 2030 using negative-emissions technologies and a further 40 million tons through nature-based approaches (beyond the 270 million tons captured by land and forest sinks today).' As a result, by 2050 EU regulations will require the offset of residual carbon dioxide emissions, increasing the demand for carbon credits. Further, the report entitled 'A blueprint for scaling voluntary carbon markets to meet the climate challenge' by Christopher Blaufelder et al. predicts that the demand for carbon credits will increase by a factor of up to 100 by 2050. According to the paper entitled 'Carbon Removal - Assessing carbon removal pathways, their potential, barriers and policy options to accelerate development as part of a suite of climate actions' produced by the World Resources Institute, 'Globally, scientists predict that up to 10 GtCO₂ will need to be removed annually from the atmosphere by 2050, with increased removal capacity up to 20 GtCO₂ per year by 2100.'

There are a number of known techniques for carbon sequestration, for example US 8,092,118 discloses increasing soil organic carbon by acidifying land applied water with pH adjusted sulphur dioxide to open soil pores at greater depths. Further, the paper entitled 'Geological GHG emission mitigation: a preliminary investigation of crushed basalt as a soil amendment to sequester atmospheric CO₂' by Frank McDermott discussed an investigation into the efficacy of crushed basalt as a carbon dioxide sequestering soil amendment for a range of soil types and conditions. The article entitled '"One tonne of olivine sand can take in up to one tonne of CO₂" says Teresa Van Dongen' by Marcus Fairs discloses the used of crushed olivine as a carbon dioxide sequestering soil amendment. The use of crushed demolition waste as a carbon dioxide sequestering soil amendment is also known, as discussed in the paper entitled "Carbon dioxide uptake in demolished and crushed concrete" by Christian J. Engelsen et al. Another approach to using concrete to sequester carbon dioxide, as disclosed in WO 2012/079173, is to inject recycled liquid carbon dioxide into the concrete at wet mix stage during the manufacture of concrete - however, the act of injecting carbon dioxide into concrete is cumbersome and has proved of limited use.

All of the above known carbon sequestration techniques have significant drawbacks. Sulphur dioxide is a toxic gas as well as being a major air pollutant with significant effects on human health. Thus, the use of sulphur dioxide as a soil amendment has yet to gain widespread acceptance. Crushed basalt and olivine, despite their proven efficacy as a carbon dioxide sequestering soil amendments, unfortunately can contain heavy metals which can accumulate in topsoil and enter the food chain (see the paper entitled 'Olivine Weathering in Soil, and Its Effects on Growth and Nutrient Uptake in Ryegrass (Lolium perenne L.): A Pot Experiment' by Ten Berge et al. and the paper entitled 'Geochemical behavior and potential health risk of heavy metals in basalt-derived agricultural soil and crops: A case study from Xuyi County, eastern China' by Haoxian Wang et al). Further, these materials need to be mined and crushed - for example, the production of a carbon dioxide sequestering soil amendment from basalt is energy intensive process that produces a large volume of carbon that offsets against any benefit generated its use a soil amendment.

Similar issues exist with crushed demolition waste which may be contaminated with hazardous materials. For example, crushed demolition waste may contain asbestos which is a serious health hazard - when the demolition waste is crushed, at least some of the asbestos will break into filaments. These filaments can easily become airborne in dust when the crushed demolition waste is applied as a soil additive. This is a significant problem because some asbestos minerals are known carcinogens. Further, crushed demolition waste can contain other contaminates (e.g. motor oil, plastics) which contains toxins that can enter the food chain. In addition, demolition waste will contain fully cured concrete. Fully cured concrete has a high compressive strength and is difficult to crush - thus crushing demolition waste requires significant energy and therefore generates significant amounts of carbon dioxide.

### Object

In order to address the problems set out above, the present application is directed towards a disruptive technology to help increase carbon sequestration. This will help countries meet their GHG emission targets through cost-effective capture and sequestration of carbon dioxide.

### Summary

The present disclosure is directed towards a soil additive for sequestering carbon dioxide. The soil additive comprises particles of set concrete, wherein the particles of set concrete have not fully cured.

Preferably, at least some of the particles have a surface pH of 10 or more.

Preferably, the soil additive comprises crushed returned concrete.

Alternatively, the soil additive comprises crushed de-aggregated returned concrete. Preferably, the soil additive is formed by crushing one or more cakes of de-aggregated returned concrete. More preferably, the one or more cakes of de-aggregated returned concrete are dried before or after being crushed.

Preferably, the soil additive comprises at least 10 percent by weight of particles of set concrete having a pH of 10 or more.

The present disclosure is also directed towards a method of altering the carbon dioxide absorption rate of soil. The method comprises: providing a soil additive comprising particles of set concrete, wherein the particles of set concrete have not fully cured; and spreading the additive on a soil surface.

Preferably, 5 - 15 tonnes of the additive are spread per hectare. More preferably, 10 tonnes of the additive are spread per hectare.

Preferably, the soil additive comprises crushed returned concrete.

Alternatively, the soil additive comprises crushed de-aggregated returned concrete.

Preferably, the method comprises crushing a cake of de-aggregated returned concrete. More preferably, the method comprises drying the cake of de-aggregated returned concrete before or after it is crushed.

Preferably, the particles of set concrete comprise particles of set concrete having a pH of 10 or more.

### Brief Description of the Drawings

The invention will be more clearly understood from the following description of an embodiment thereof, given by way of example only, with reference to the accompanying drawings, in which:-

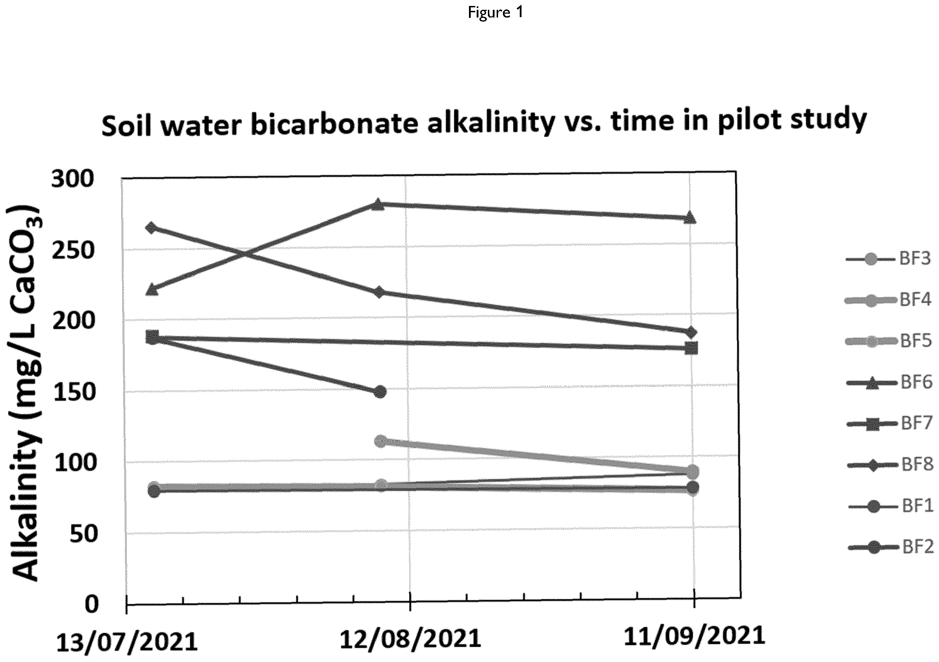

Figure 1 is a plot of soil water bicarbonate alkalinity against time.

### Detailed Description

Typically, soils contain a high concentration of carbon dioxide because of the decay of organic matter and plant root respiration. A portion of this carbon dioxide escapes into the atmosphere. However, another portion of this carbon dioxide dissolves in soil water to form carbonic acid. Natural weathering partially neutralizes this carbonic acid. In particular, carbonic acid reacts with rocks such as e.g. olivine or basalt through hydrolysis and dissolution, to generate stable dissolved bicarbonate. Weathering, as used in this description, refers to the chemical weathering of rocks, soil minerals, or soil additives.

In recent years there has been much interest in using soil additives, such as mineral and rock amendments (e.g. olivine or basalt) to increase the amount of carbon that can be fixed in the soil. In particular, by increasing the amount of material available for weathering in a soil, the amount of carbon dioxide that is removed from the soil as dissolved bicarbonate is increased. Excess bicarbonates in the soil ultimately drain into to the oceans. Bicarbonates can trap carbon in the oceans for around 100,000 years. Carbon is stable when dissolved in bicarbonate form because the charge of the carbon is balanced in solution by the cations such as calcium and magnesium that are released from the soil additives. As a result, such additives decrease the amount of carbon escaping from soil into the atmosphere as carbon dioxide and, further, increase the amount of atmospheric carbon dioxide absorbed into soil.

Thus, increased weathering caused by soil additives should result in increased bicarbonates in drainage waters. Anionic bicarbonate is the stable carrier of dissolved inorganic carbon carrier at circumneutral pH. However, increased weathering also increases divalent metal cations such as Ca and Mg in drainage water from the soil. These cations act to maintain charge balance in the waters preventing carbon dioxide escaping into the atmosphere. Further, at least some of these cations ultimately fix carbon in limestone.

An issue with mafic and ultramafic soil additives (e.g. basalt and olivine) which are presently available for carbon sequestration is that they that generally require energy- and carbon-intensive mining and grinding because of their mechanical strength and long-distance transport because their geological sources are unevenly distributed globally. Further, as noted above, these soil additives may contain heavy metal which can be absorbed into the food chain.

On any building site, it is not unusual for too much concrete to be ordered and then delivered. As a result, a portion of the concrete delivered is unused and is returned to the concrete production site. According to the US National Ready Mix Concrete Association (NRMCA), 3-5% of produced concrete is returned to its producer. Returned concrete is an operational, financial, and environmental challenge for concrete producers.

At present returned concrete is typically allowed to set (i.e. until it losses plasticity). Before it fully cures (i.e. before it develops it full compressive strength), it is then crushed to form crushed returned concrete (CRC).

At present there is no viable use for CRC. CRC can be occasionally used as a back-fill material, e.g. as a gravel bed for a road-base for non-demanding applications (e.g. farm roads). However, it is prohibited to reuse CRC (e.g. as an aggregate in concrete) in many jurisdictions. As a result, returned concrete remains a highly alkaline material that has to yet to find a suitable use.

At present, no research has been published on the carbon capture potential of CRC as a soil amendment. In particular, it appears that there has been a technical prejudice against spreading CRC on agricultural land. In particular, due to its high pH, chemical reactivity, and alkalinity, CRC has to date been seen primarily as a pollutant that could negatively impact on soil chemistry or pH.

### Experimental Data

A contractor spread CRC as a soil additive to the upper 15cms of a one-hectare trial tillage field in southeast Ireland at a rate of 10 tonnes per hectare. To determine the geochemical impact of CRC on soil water, shallow soil-water solutions were extracted for analysis using suction-cup lysimeters at monthly intervals from the trial tillage field. Control soil-water solutions were also extracted for analysis using suction-cup lysimeters at monthly intervals amended from untreated control sites adjacent to the trial tillage field.

Using the soil-water samples, carbon dioxide uptake rates could be estimated based on the rate of carbonic acid neutralisation and bicarbonate ion production.

Figure 1 shows the alkalinity results from shallow soil water samples from a number of plots in the trial tillage field and shallow soil water samples from a number of plots in the control plots. Whilst two of the treated sites show no change in bicarbonate alkalinity (BF1, and BF3), the four other treated sites (BF2, BF6, BF7, and BF8) show a 2- to 3-fold increase in soil water dissolved bicarbonate alkalinity. The two sites that showed no change in alkalinity, BF1 and BF3, were close to the edges of the field where inadequate coverage by CRC is likely because of the machinery used to spread the material.

Relative to the untreated control sites, the trial tillage field exhibited a significant increase in soil-water pH (by 0.2 to 0.5 pH units). These changes in soil-water are indicative of the weathering of portlandite (CaOH₂) and calcium silicates in the CRC. Advantageously, there was no detectable parts-per-billion increase in heavy metals (e.g. Ni, Cr). Further, the weathering could entirely be attributed to carbonic acid neutralization, with no evidence of weathering by strong acids, as evidenced by the high molar ratios of bicarbonate to combined calcium and magnesium. As a result, through absorbing 'excess' carbon present in soil water as carbolic acid and converting it to stable dissolved bicarbonate, the volume of carbon dioxide released from the soil water to the atmosphere was reduced.

Although a small but significant increase in soil pH was observed, it is not detrimental to the soil's chemistry. Instead, when applied at rates of 10 tonnes/hectare, CRC was found to be beneficial. CRC reduced the acidity of moderately low pH soils (c. 6.1) that characterised the site prior to treatment. Further, there was a two- to three-fold increase in electrical conductivity (total ion load). Similar increases in both soil-water Ca²⁺ and leachable calcium were also observed. CRC was found to replenish depleted base cations, thereby counteracting soil acidification. Soil acidification is caused by the depletion of base cations, such as Ca²⁺ through natural weathering processes in soils. Soil acidification is a common problem in relatively wet climates. By counteracting soil acidification, the use of CRC should lead to enhanced bioavailability of essential nutrients such as ammonium and potassium following the application of organic or inorganic fertiliser. As a result, the fertility of soils in areas of moderate rainfall and low temperatures can be improved. To put it differently, the test results surprisingly showed that rather than being a soil contaminant , CRC instead performed well as a base cation-providing and pH buffering fertiliser.

### Conclusion

The present disclosure is based on the insight that a substance that previously did not have a use and was incorrectly considered a potential pollutant is in fact a valuable soil additive product that effectively sequesters carbon dioxide, increases soil pH buffering capacity, and provides valuable base cation fertilization.

Given that concrete is typically shipped short distances, CRC has a low energy and carbon transportation cost given the high density of nearby production site - i.e. it can be supplied over short haulage distances. Unlike prior art soil additives for sequestering carbon dioxide, returned uncured concrete is not a strong material like e.g. basalt, olivine, or demolition rubble. Thus, transporting and crushing returned uncured concrete requires much lower energy (and will produce less carbon dioxide) than prior art soil additives for carbon dioxide sequestering. Minimal crushing of returned concrete that has just set (immediately after plasticity loss) is required to achieve an additive with the high measured specific surface areas (e.g. 10 m² /g) measured in the experimental study that underpins this disclosure. For the purposes of the present disclosure, concrete having a pH less than 10 is considered to be fully cured. Thus, a soil additive in accordance with the present disclosure should have a pH value of 10 or more. The pH of the additive can be measured using any suitable pH test known in the art. For example, concrete which reacts with a 1% phenolphthalein solution to produce a pink/purple colour has been found suitable for use as a soil additive.

The use of 'normal' CRC (i.e. CRC where the aggregates in the returned concrete is crushed along with the cement and sand) as a useful soil additive is clear from the description above. However, preferably 'de-aggregated' CRC is used.

De-aggregated CRC is formed from de-aggregated returned concrete. De-aggregated returned concrete is formed from returned concrete that has been processed to remove the aggregates present in the returned concrete. De-aggregated returned concrete is typically comes in cake form. Thus, de-aggregated CRC can be provided by crushing cakes of de-aggregated returned concrete. The cakes of de-aggregated returned concrete may be dried prior to being crushed. Alternatively, the crushed de-aggregated returned concrete prior to being provided as a soil amendment. A cake of de-aggregated returned concrete has a low compressive strength and can be easily crushed by hand to form de-aggregated CRC which is suitable for use as a soil additive. Thus, the de-aggregated cakes of returned concrete can be quickly and cheaply converted into a soil additive with minimal energy - i.e. minimal carbon dioxide is generated when converting de-aggregated returned concrete into a useable product. As such, any suitable means known in the art can be used to break up or crush cakes of de-aggregated returned concrete to a form suitable for use as a soil additive which can then be spread on soil using conventional farm machinery.

A cake of de-aggregated returned concrete is formed from returned concrete that has been processed to remove the aggregates present in the returned concrete. For example, prior to the returned concrete setting (i.e. while it still has plasticity) returned concrete is provided to a recycling plant. In the recycling plant, water is added to the retuned concrete and the mixture is agitated with paddles. As a result, the cementitious content of the returned concrete is separated from the sand and aggregates in the returned concrete. The aggregates can be removed from the mix using one or more suitable sized sieves. The aggregates are then moved, e.g. by conveyor belt, to a storage bunker. The rest of the mix (i.e. the water, cement, and sand) is provided to a press (e.g. a hydraulic press). The press is used in conjunction with a suitable sized sieve to squeeze the water out of the mix. The water is provided to a storge pond for reuse. The remaining residue of the mix (which comprises sand, cementitious content from the returned concrete, and water than cannot be mechanically removed) is removed from the press - the residue will have formed a cake of de-aggregated returned concrete under pressure from the press. Thus, it is possible to retrieve aggregates from returned concrete. The term 'aggregates' is used to refer to rock and mineral particles in the returned concrete that are larger than sand particles (e.g. aggregate particles are particles having a diameter greater than 4.75 millimetres).

As a cake of de-aggregated returned concrete will contain a certain amount of water after removal from the press, it is advantageous to dry the cake of de-aggregated returned concrete before or after it is crushed to remove this water. Amongst other benefits, drying lowers the weight of the resulting de-aggregated CRC, reducing transport costs and the carbon dioxide generation associated with transport.

The use of de-aggregated CRC as a soil amendment is advantageous as it lessens waste. The aggregates that are recovered from returned concrete can be reused - which reduces the amount of carbon dioxide generated by, and costs associated with, quarrying aggregates.

Further de-aggregated CRC comprises a higher ratio of cement than 'normal' CRC. As a result, less weight of de-aggregated CRC needs to be spread as an additive on soil to achieve the same pH and carbon dioxide sequestered results as a given weight of 'normal' CRC. Therefore, transport of de-aggregated CRC costs less and generates less carbon dioxide that the use of 'normal' CRC.

## Claims

1. A soil additive for sequestering carbon dioxide, the soil additive comprising particles of set concrete, wherein the particles of set concrete have not fully cured.

2. The soil additive of claim 1, wherein at least some of the particles have a surface pH of 10 or more.

3. The soil additive of any preceding claim, wherein the soil additive comprises crushed returned concrete.

4. The soil additive of claim 1 or 2, wherein the soil additive comprises crushed de-aggregated returned concrete.

5. The soil additive of claim 4, wherein the additive is formed by crushing one or more cakes of de-aggregated returned concrete.

6. The soil additive of claim 5, wherein the one or more cakes of de-aggregated returned concrete are dried before or after being crushed.

7. The soil additive of any preceding claim, wherein the soil additive comprises at least 10 percent by weight of particles of set concrete having a pH of 10 or more.

8. A method of altering the carbon dioxide absorption rate of soil, comprising:
providing a soil additive comprising particles of set concrete, wherein the particles of set concrete have not fully cured; and
spreading the additive on a soil surface.

9. The method of claim 8, wherein 5 - 15 tonnes of the additive are spread per hectare.

10. The method of claim 9, wherein 10 tonnes of the additive are spread per hectare.

11. The method of any one of claims 8 to 10, wherein the soil additive comprises crushed returned concrete.

12. The method of any one of claims 8 to 10, wherein the soil additive comprises crushed de-aggregated returned concrete.

13. The method of any one of claims 8 to 10, wherein the method comprises crushing a cake of de-aggregated returned concrete.

14. The method of claim 13, wherein the method comprises drying the cake of de-aggregated returned concrete before or after it is crushed.

15. The method of any one of claims 8 to 14, wherein the particles of set concrete comprise particles of set concrete having a pH of 10 or more.

## Amended claims

### Amended claims in accordance with Rule 137(2) EPC.

1. A soil additive for sequestering carbon dioxide, the soil additive comprising particles of set concrete, **characterised by** at least some of the particles having a surface pH of 10 or more.

2. The soil additive of claim 1, wherein the soil additive comprises crushed returned concrete.

3. The soil additive of claim 1, wherein the soil additive comprises crushed de-aggregated returned concrete.

4. The soil additive of claim 3, wherein the additive is formed by crushing one or more cakes of de-aggregated returned concrete.

5. The soil additive of claim 4, wherein the one or more cakes of de-aggregated returned concrete are dried before or after being crushed.

6. The soil additive of any preceding claim, wherein the soil additive comprises at least 10 percent by weight of particles of set concrete having a pH of 10 or more.

7. A method of altering the carbon dioxide absorption rate of soil, comprising:
providing a soil additive comprising particles of set concrete; and
spreading the additive on a soil surface, wherein the method is **characterised by**:
the particles of set concrete comprising particles of set concrete having a pH of 10 or more.

8. The method of claim 7, wherein 5 - 15 tonnes of the additive are spread per hectare.

9. The method of claim 8, wherein 10 tonnes of the additive are spread per hectare.

10. The method of any one of claims 7 to 9, wherein the soil additive comprises crushed returned concrete.

11. The method of any one of claims 7 to 9, wherein the soil additive comprises crushed de-aggregated returned concrete.

12. The method of any one of claims 7 to 9, wherein the method comprises crushing a cake of de-aggregated returned concrete.

13. The method of claim 12, wherein the method comprises drying the cake of de-aggregated returned concrete before or after it is crushed.
